# FASCICULE DE BREVET EUROPEEN

(11) **EP 2 484 083 B1**
(45) Date de publication et mention de la délivrance du brevet: **06.06.2018**
(21) Numéro de dépôt: 10771797.7
(22) Date de dépôt: 22.09.2010
(51) Int. Cl.: H04L 29/06, H04M 1/56, H04M 15/06, H04M 15/00, H04M 1/57

(54) **PROCEDE DE MASQUAGE D'UN IDENTIFIANT D'AU MOINS UN DESTINATAIRE D'UNE COMMUNICATION, DISPOSITIF ET PROGRAMME D'ORDINATEUR CORRESPONDANT**
VERFAHREN ZUR MASKIERUNG EINES IDENTIFIZIERERS VON MINDESTENS EINEM EMPFÄNGER EINER KOMMUNIKATION, VORRICHTUNG UND ZUGEHÖRIGES COMPUTERPROGRAMM
METHOD FOR MASKING AN IDENTIFIER OF AT LEAST ONE RECIPIENT OF A COMMUNICATION, DEVICE AND CORRESPONDING COMPUTER PROGRAM

(30) Priorité: 29.09.2009 FR 0956768
(43) Date de publication de la demande: 08.08.2012
(73) Titulaire: Orange, 75015 Paris (FR)
(72) Inventeur: ELIE, Stéphane, F-22540 Pedernec (FR); PIETO, Loïc, F-22300 Rospez (FR)
(86) Numéro de dépôt international: PCT/FR2010/051990
(87) Numéro de publication internationale: WO 2011/039451

(56) Documents cités:
- WO-A1-01/27724
- US-A1- 2005 097 171
- US-A1- 2007 011 245

## Description

### 1. Domaine de l'invention

Le domaine de l'invention est celui des systèmes de communications entre un utilisateur et au moins un destinataire. Plus précisément, l'invention s'applique à la gestion de l'identifiant d'un ou plusieurs destinataire(s) d'une communication.

L'invention peut notamment s'appliquer au regard des nouvelles et futures techniques liées à la mise en réseau local d'un ensemble de terminaux (téléphone, ordinateur, télévision...) permettant d'afficher sur l'ensemble des terminaux du système, les caractéristiques d'une communication effectuée sur le réseau local.

Plus précisément l'invention peut par exemple trouver une application dans le cas où il est possible, à partir d'un terminal de communication de vérifier ou de contrôler les différentes communications en cours. Une telle situation se rencontre quand un utilisateur dispose de plusieurs terminaux sans fil possédant chacun un écran par exemple.

### 2. Art antérieur

On connaît depuis quelques années une multiplication des terminaux permettant d'établir une communication avec au moins un destinataire. En effet, les téléphones fixes permettent d'établir au moins un appel téléphonique. Les derniers terminaux téléphoniques, qu'ils soient fixes ou mobiles, sont par ailleurs dotés de fonctions multiples et notamment d'un grand écran qui peut permettre d'établir une visioconférence avec un destinataire, ou encore d'écrire de courts messages en utilisant le service de messagerie SMS (de l'anglais « *Short Message Service* »)*.*

Par ailleurs, l'utilisation d'*Internet,* devenue courante voire indispensable que ce soit dans les milieux personnels ou professionnels a également entraîné la multiplication d'applications nécessitant un grand écran sur les terminaux aptes à établir une communication avec au moins un destinataire.

Par exemple on peut se référer à l'arrivée de terminaux fixes disposant d'un « grand » écran déporté tel que les modèles utilisant les technologies à écrans tactiles (de l'anglais « *Touch Screen* »)*.* Ces écrans tactiles sont notamment intégrés dans des produits tels que : *Open Peak*®, *Verizon Hub*® ou encore le *Home Manager*® d'AT&T, produits « tout en un » dédiés à un réseau de communication domestique permettant d'assurer à la fois les fonctions propres à un téléphone (fixe ou mobile), une télévision, un ordinateur...

L'avantage, d'un point de vue ergonomique de l'ensemble de ces systèmes de communication utilisant un grand écran, est que lorsque l'utilisateur établit une communication, l'identité de son correspondant est visible sur l'écran du terminal utilisé par l'utilisateur. Cependant, la taille de ces écrans étant de plus en plus importante, si l'utilisateur souhaite garder l'identité de son interlocuteur confidentielle, il est confronté à un problème lié à la visualisation aisée par un tiers.

Selon les inventeurs, dans un avenir proche, il sera possible de visualiser (voir superviser) les appels en cours depuis l'ensemble des équipements du réseau domestique (télévision, ordinateur, ...). Il deviendra alors impossible de conserver confidentiel un appel sortant sans que les personnes regardant la télévision ou regardant la télévision ne s'en aperçoivent.

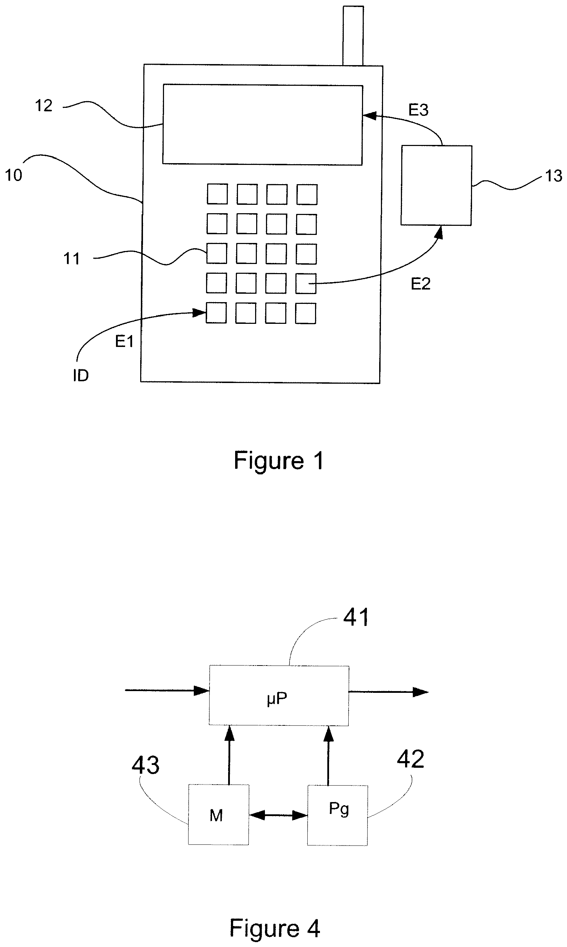

Un terminal 10 doté d'un grand écran 12 est illustré schématiquement sur la figure 1. Classiquement, l'utilisateur souhaitant établir une communication avec au moins un destinataire saisit (E1) l'identifiant *ID* correspondant par exemple au numéro 10 04 33 06 72, de son destinataire sur un clavier. L'identifiant ID est ensuite traité (E2) par un module de traitement 13 compris dans le terminal 10 (représenté à l'extérieur du terminal afin de clarifier uniquement le fonctionnement de la mise en relation de l'utilisateur avec le destinataire). Ce module de traitement 13 mémorise classiquement l'identifiant de la communication dans un historique de communication du terminal et transmet (E3) l'identifiant au grand écran, afin d'afficher l'identifiant du destinataire de la communication. Le grand écran affiche sur l'exemple représenté en figure 1 le numéro du destinataire, il peut également afficher son identité (prénom, nom) ou encore d'autres informations liées au destinataire.

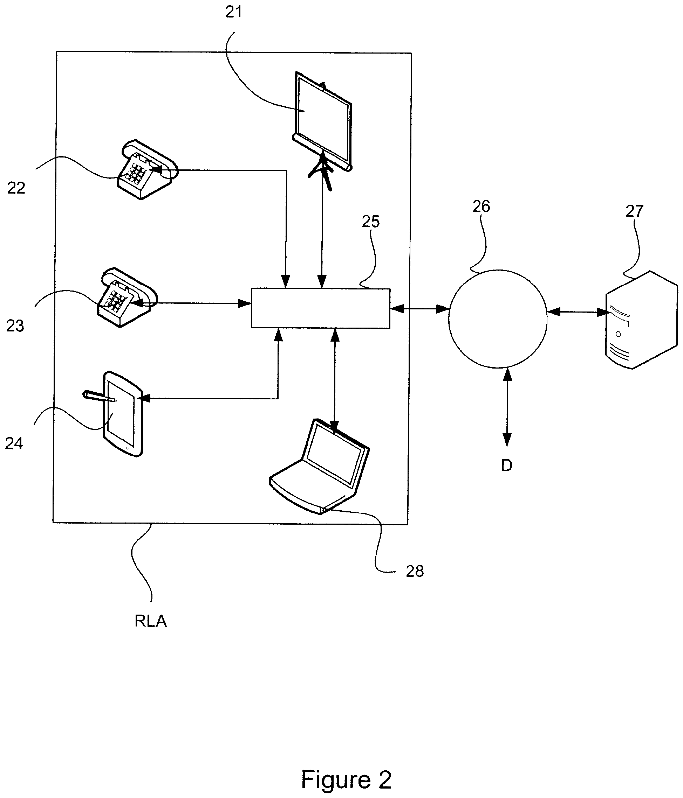

Si l'on prend l'exemple de *n* (*n étant un nombre* entier) terminaux au sein d'un domicile, illustrés par la figure 2 liés à un même réseau local et donnant simultanément des informations sur les communications en cours, un utilisateur qui souhaite organiser une surprise d'anniversaire par exemple à son conjoint, est non seulement obligé de s'isoler afin de ne pas être vu ni entendu par son conjoint, mais il doit également isoler les *n-1* terminaux affichant les informations liées à la communication qu'il souhaite garder secrète et qu'il passe à l'aide du terminal d'origine sur lequel l'utilisateur compose l'appel. Une telle opération peut s'avérer délicate si les terminaux sont peut discrets voire impossible si les terminaux sont trop volumineux.

Par ailleurs, même si l'utilisateur est parvenu à effectuer cette opération complexe, faut-il encore qu'aucune trace de cette communication ne perdure, que ce soit au sein du terminal ou même encore au sein de l'opérateur de la communication.

Le document WO 01/27724 décrit la gestion d'accès à des données privées d'un utilisateur particulier. Ces données privées sont enregistrées suite à l'utilisation d'applications (par exemple des historiques de consultation d'adresses URL, des listes d'adresses ou de téléphones) et sont adapté pour empêcher l'affichage des informations d'utilisation. Le document US 2005/097171 cherche à masquer les informations de toute une liste d'adresses de contacts stocké sur un équipement pour que celui qui n'a pas le bon code d'accès ne puisse pas voir toutes les informations concernant les contacts enregistrés. Ceci est fait indépendamment d'une communication en particulier et pas en temps réel.

Les inventeurs n'ont identifié aucune solution déjà existante permettant de résoudre le problème lié à la confidentialité du destinataire d'une communication.

### 3. Exposé de l'invention

L'invention propose une solution nouvelle qui ne présente pas l'ensemble de ces inconvénients de l'art antérieur, sous la forme d'un procédé d'établissement d'une communication entre un utilisateur et au moins un destinataire, définie par l'objet de la revendication indépendante 1. Ainsi, l'invention permet de masquer l'identité du destinataire de la communication à d'autres utilisateurs du terminal. Un tel masquage est réalisé, selon l'invention, grâce à une modification du signal comportant l'identifiant de sorte que l'identifiant modifié ne soit pas interprétable par un autre utilisateur.

L'invention peut être mise en oeuvre à partir d'un terminal sans moyens d'affichage, lorsque seul l'aspect masquage de l'identifiant du destinataire sur le journal d'appels réseau ou sur la facture intéresse l'utilisateur.

Selon un mode de réalisation particulier de l'invention, ledit utilisateur dispose d'au moins un terminal comprenant des moyens d'affichage d'un identifiant d'au moins un destinataire d'une communication, et ladite étape de modification comprend une étape de remplacement dans ledit signal d'au moins un caractère constitutif dudit identifiant par au moins un caractère de masquage, délivrant un identifiant masqué et en ce qu'il comporte en outre une étape de restitution dudit identifiant masqué par l'intermédiaire desdits moyens d'affichage dudit terminal.

Ainsi, l'invention permet de masquer l'identité du destinataire de la communication sur le terminal de l'appelant, mais également sur les terminaux du réseau domestique susceptibles de donner cette information, lesdits terminaux étant pourvus de moyens d'affichage tels qu'un écran par exemple. L'invention permet ainsi de respecter la confidentialité de l'appel passé par l'utilisateur.

Par ailleurs, le procédé selon l'invention vise à permettre le masquage du destinataire pour différents types de communications. Par « communication », l'inventeur considère une mise en relation au sens large (envoi d'un SMS (de l'anglais « Short Message Service »), visioconférence, messagerie instantanée, messagerie électronique, etc). En effet, l'utilisateur dispose couramment d'une panoplie de systèmes de communication. L'utilisateur peut par exemple téléphoner que ce soit avec un terminal fixe ou mobile.

L'utilisateur peut également communiquer via un service de messagerie électronique. Il peut également « chatter » via les services Internet de messagerie instantanée. On peut par exemple considérer un utilisateur ayant une conversation instantanée avec plusieurs utilisateurs.

Selon l'invention, l'utilisateur peut également masquer l'identité du ou de ses interlocuteur(s) sur le terminal qu'il utilise mais également sur une pluralité de terminaux mis en réseau avec le terminal utilisé.

Par ailleurs, l'invention peut mettre en oeuvre un masquage partiel ou total de l'écran du terminal utilisé. En effet, L'invention peut si l'on considère l'exemple du numéro de téléphone, le masquer selon plusieurs possibilités parmi lesquelles :
- remplacement d'au moins un chiffre du numéro appelé par un « X »,
- masquage total de l'écran,
- masquage d'au moins une ligne de l'écran correspondant à la ligne du numéro de téléphone.

Selon une caractéristique particulière, le procédé selon l'invention comprend en outre une étape de suppression dudit identifiant saisi par ledit utilisateur dans un historique de communication dudit terminal et/ou de remplacement par ledit identifiant masqué.

Ainsi, l'invention permet de ne pas laisser de traces, sur le terminal de l'appelant, de l'appel qui a été passé par celui-ci. En effet, l'invention permet d'effacer la trace de la communication au sein d'un journal d'appel, ou encore d'un historique de communication instantané ou encore un historique de messagerie électronique ou encore sur la facture de l'utilisateur.

Selon un aspect particulier de l'invention, ledit procédé comprend en outre une phase d'activation de ladite phase de masquage.

Ainsi, l'invention permet de ne pas systématiquement procéder au masquage des identifiants (par exemples des numéros) saisis par l'utilisateur, mais par exemple de réserver ce masquage à certains cas particuliers.

Plus particulièrement, ladite phase d'activation comprend une étape de transmission d'une information de signalisation de ladite activation à destination d'une entité d'un réseau de communication.

Cette information de signalisation peut être insérée dans un signal lors de l'étape de mise en relation entre l'utilisateur et le destinataire.

Ainsi, grâce à cette information de signalisation, le destinataire, pouvant de son côté identifier l'émetteur de la communication, peut être informé (ou non) de la volonté de son interlocuteur de cacher sa communication au sein de son domicile. Par ailleurs, le réseau de communications, utilisé par le terminal de l'utilisateur, est informé de la volonté de l'utilisateur de garder confidentiel l'identité de son interlocuteur.

Selon un mode de réalisation particulier de l'invention, ladite phase d'activation comprend une étape de déclenchement automatique quel que soit l'identifiant dudit destinataire.

Ainsi l'invention permet à un utilisateur d'opter pour une confidentialité permanente de l'identité de ses interlocuteurs. Un tel mode de réalisation peut par exemple être requis par un utilisateur ayant une profession qui requiert notamment de garder confidentielle l'identité de tout client (garde du corps, agent secret, hôtellerie de luxe).

Selon un autre mode de réalisation particulier, ladite phase d'activation comprend une étape de déclenchement par l'utilisateur pour une pluralité de communications successives.

Ainsi, l'invention permet à l'utilisateur d'enclencher le masquage des destinataires de plusieurs communications. Notamment lors de l'organisation d'un événement tel qu'une surprise, l'utilisateur, s'il tente de joindre plusieurs participants ou acteurs de l'événement, active le masquage de leur identité au début d'une série d'appels téléphoniques (ou autres types de communications) et désactive le masquage une fois la série d'appels (ou autres types de communications) effectués.

Selon un autre mode de réalisation particulier, ladite phase d'activation comprend une étape de déclenchement par l'utilisateur à la demande.

Ainsi, l'utilisateur a la possibilité de décider de l'activation appel par appel, en fonction de ses besoins.

Selon un aspect particulier de l'invention, ladite phase d'activation comprend une étape de saisie, au sein dudit terminal, d'un préfixe d'activation entré par l'utilisateur.

La saisie peut être une saisie au clavier ou par pression de l'écran tactile ou une saisie vocale. Dans le cas de l'utilisation d'un écran tactile, l'utilisateur n'aura pas à saisir le préfixe, une pression sur une touche (virtuelle) prédéterminée activera le service et génèrera automatiquement le préfixe d'activation nécessaire. Le préfixe d'activation peut être un code choisi par l'utilisateur, par exemple le chef de famille. Selon un autre mode de réalisation, on peut considérer que le préfixe d'activation est imposé par défaut sur le terminal ou encore par le réseau de l'opérateur.

L'utilisation d'une saisie vocale peut mettre en oeuvre une reconnaissance vocale permettant d'identifier le locuteur. Ainsi, il est possible d'interdire à un utilisateur d'utiliser le masquage d'appel en reconnaissant vocalement l'utilisateur qui tente de masquer l'identifiant de l'interlocuteur appelé. Dans ce cas, l'étape d'activation est désactivée si le locuteur identifié ne vérifie pas un paramètre d'identification prédéterminé. Par exemple si un enfant du domicile est identifié, son âge étant inférieur à 18 ans, le procédé selon l'invention est désactivé même si l'enfant connaît le préfixe d'activation. Ainsi, l'identifiant du destinataire de la communication de l'enfant apparaîtra au moins sur l'écran et dans l'historique de communication du terminal.

Selon un aspect particulier et optionnel de l'invention, ladite phase d'activation pourrait être ignorée si ledit identifiant correspond à un destinataire dont la communication avec l'utilisateur serait surtaxée.

Ainsi, l'invention permet à l'utilisateur de contrôler l'activation d'un masquage de l'identifiant d'un destinataire si celui-ci figure dans une liste d'identifiants spéciaux dont l'accès est surtaxé. Par exemple, si un utilisateur établit un appel téléphonique dont le numéro correspond à un appel surtaxé, le procédé selon l'invention pourra ignorer la demande de masquage si le numéro appelé figure dans une liste de numéros préalablement signalés comme surtaxés ou encore selon l'indicatif du numéro propre à un appel à l'étranger ou encore un appel en (08) pour la France métropolitaine.

Plus particulièrement, le procédé selon l'invention comprend en outre les étapes suivantes :
- réception par une entité d'un réseau de communication, d'un signal de communication échangé entre un utilisateur et au moins un destinataire, ledit signal comprenant une information de signalisation d'une activation d'un masquage d'un identifiant dudit au moins un destinataire ;
- masquage dudit identifiant dudit au moins un destinataire de ladite communication, au sein d'une base de données représentatives des communications dudit utilisateur, de ladite entité d'un réseau de communication.

Ainsi, selon l'invention, l'activation du masquage de l'identité du destinataire en interne entraîne également le masquage de l'identité du destinataire dans la base de données. Par exemple, le masquage du destinataire de la communication sera prise en compte dans la base de données de l'opérateur, qui en conséquence établira une facture où l'identifiant du destinataire sera masqué.

L'invention concerne également un terminal définie par l'objet de la revendication indépendante 12. Selon un mode de réalisation particulier de l'invention, ledit terminal comprend des moyens d'affichage d'un identifiant d'au moins un destinataire d'une communication, et lesdits moyens de modification comprennent des moyens de remplacement dans ledit signal d'au moins un caractère constitutif dudit identifiant par au moins un caractère de masquage, délivrant un identifiant masqué. Ledit terminal comporte en outre des moyens de restitution dudit identifiant masqué par l'intermédiaire desdits moyens d'affichage dudit terminal.

Un tel dispositif d'émission est notamment adapté à mettre en oeuvre le procédé d'émission décrit précédemment. Il s'agit par exemple d'un terminal de type radiotéléphone fixe ou mobile, d'un ordinateur fixe ou portable, d'un assistant personnel de type PDA (en anglais « *Personal Digital Assistant* »), ou encore d'un téléviseur relié à un réseau de communication domestique.

L'invention concerne enfin un programme d'ordinateur comportant des instructions pour la mise en oeuvre du procédé selon l'invention, lorsque ce programme est exécuté par un processeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un terminal déjà commenté en relation avec l'art antérieur ;
- la figure 2 présente un système dans lequel est mis en oeuvre le procédé selon un mode de réalisation particulier de l'invention ;
- la figure 3 illustre les principales étapes du procédé selon un mode de réalisation de l'invention dans un système tel que présenté en figure 2 ;
- la figure 4 présente la structure d'un dispositif de communication entre un utilisateur et au moins un destinataire selon un mode de réalisation particulier de l'invention.

### 5. Description détaillée de l'invention

### Principe général

Le principe général de l'invention repose sur l'établissement d'une communication entre un utilisateur et au moins un destinataire, permettant à un utilisateur de contrôler la diffusion de l'identité du destinataire qu'il souhaite joindre. L'identité du destinataire d'une communication peut selon l'invention être
- masquée sur les moyens d'affichage du terminal de communication,
- effacée de l'historique de communication,
- masquée au sein d'une base de donnée intégrée dans une entité d'un réseau de communication, par exemple chargée d'effectuer la facturation des appels passés et/ou de détailler les communications passées, par exemple mensuellement.

Ainsi, l'invention permet d'effacer toute trace d'un destinataire d'une communication et ce jusque sur la facture émise par l'opérateur de communication.

On présente, en relation avec la figure 2, un exemple de système dans lequel le procédé selon l'invention peut être mis en oeuvre. Dans ce système, un réseau local domestique *RL_{A}* d'un utilisateur *A* (non représenté sur la figure 2) est représenté. En relation avec la figure 2, deux terminaux, par exemple, deux combinés de téléphonie filaires ou non 22 et 23 sont reliés au réseau domestique *RL_{A}* et sont dotés de larges écrans (non représentés sur la figure 2). Les autres terminaux 21, 28, 24 du réseau domestique *RL_{A}* peuvent également être considérés. Ces deux combinés associés à une même ligne téléphonique communiquent entre eux et avec d'autres terminaux communiquant avec le réseau local domestique RL_{A} via par exemple un module de gestion de réseau local 25.

Ces deux combinés offrent notamment une gestion pratique des communications téléphoniques. En effet, dans le cas de l'arrivée d'un appel téléphonique au sein du domicile de l'utilisateur *A*, une répartition ingénieuse des combinés dans le domicile permet à l'utilisateur *A* de limiter ses déplacements afin de répondre à cet appel. Par ailleurs, les terminaux 22 et 23 peuvent également être portables et reliés à une base offrant à l'utilisateur A la possibilité d'être déplacés suivant ses besoins.

En relation avec la figure 2, le téléphone portable 24, l'ordinateur 28 portable (ou non), le téléviseur 21 sont également reliés au réseau *RL_{A}* via le module de gestion de réseau local 25. Ces terminaux sont aptes à diffuser des infos sur les appels en cours émis par le réseau.

Le module de gestion de réseau local 25, communément appelé « box » (il s'agit par exemple d'une passerelle résidentielle) peut communiquer selon différentes techniques avec les terminaux appartenant au réseau RL_{A}. Ces techniques peuvent notamment appartenir au groupe comprenant :
- la voix sur réseau IP, ou « VoIP » de l'anglais « *Voice over IP* », technique permettant de communiquer par la voix via l'Internet ou tout autre réseau acceptant le protocole TCP/IP. Cette technologie est notamment utilisée pour supporter le service de téléphonie IP (« ToIP » pour Telephony over Internet Protocol),
- le Wi-Fi, une technologie déposée de réseau informatique sans fil mise en place pour fonctionner en réseau interne et, depuis, devenue un moyen d'accès à haut débit à Internet, basé sur la norme IEEE 802.11 (ISO/CEI 8802-11),
- Bluetooth utilisant une technologie radio courte distance destinée à simplifier les connexions entre les appareils électroniques et conçue dans le but de remplacer les câbles entre les ordinateurs et les imprimantes, les scanners, les claviers, les souris, les manettes de jeu vidéo, les téléphones portables, les PDA, les systèmes et kits mains libres, les autoradios, les appareils photo numériques,
- Ethernet, protocole de réseau local à commutation de paquets,
- la téléphonie sans-fil numérique améliorée (DECT de l'anglais « Digital Enhanced Cordless Telephone », anciennement « Digital European Cordless Telephone »), norme de téléphonie sans-fil numérique destinée aux particuliers comme aux entreprises sur la gamme de fréquence 1880 à 1 900 MHz (micro-ondes), aujourd'hui principalement utilisée pour des communications vocales,
- etc.

Le réseau local domestique *RL_{A}* communique avec un réseau public 26. Ainsi, l'utilisateur *A* communique avec un interlocuteur destinataire *D* d'une communication via le réseau public 26.

Par ailleurs, le réseau public 26 est également relié à une entité de réseau contenant une base de données 27 permettant de stocker des données représentatives des communications de l'utilisateur dans une entité de réseau de communication. Par exemple, cette base de données peut être utilisée par un opérateur de réseau téléphonique ou encore un opérateur de réseau Internet.

Selon un mode de réalisation non représenté, on peut également considérer que le système selon l'invention met en oeuvre un réseau local domestique réduit relié au Réseau Téléphonique Commuté (RTC).

Ces terminaux RTC (non représentés) tout comme les terminaux 21, 22, 23, 24, 28 dotés d'écrans affichent jusqu'ici l'identifiant du destinataire *D* d'une communication émise par l'utilisateur *A.*

Ainsi, si l'utilisateur *A* souhaite appeler un restaurant *D* pour réserver une table afin de célébrer son anniversaire de mariage et en faire la surprise à son ou sa conjoint(e), il doit s'armer de prudence et prendre beaucoup de précautions, afin de garantir l'effet de surprise. En effet, la surprise suppose que l'utilisateur A s'isole du regard de son ou sa conjoint(e), et isole des yeux de son compagnon ou sa compagne tout terminal doté d'un écran affichant les informations relatives à l'identité du destinataire. Chose complexe, s'il est nécessaire d'isoler à la fois les combinés de téléphonie fixes, mobiles, le téléviseur, l'ordinateur fixe ou portable sans être remarqué par son conjoint.

L'invention propose une nouvelle méthode d'établissement de communication entre l'utilisateur A et le destinataire D qui permet de contrôler la diffusion des informations du destinataire à son entourage.

Il n'était pas évident de partir de l'art antérieur qui ne divulgue pas de solution permettant de préserver l'anonymat d'un destinataire. Le développement des technologies actuelles voir futures vise plutôt à donner le plus d'informations possibles en temps réel et non à les dissimuler. En effet, selon l'invention, un masquage de l'identifiant du destinataire est mis en oeuvre pour permettre de garder secret l'identifiant du destinataire.

### Description d'un mode de réalisation de l'invention au sein d'un terminal

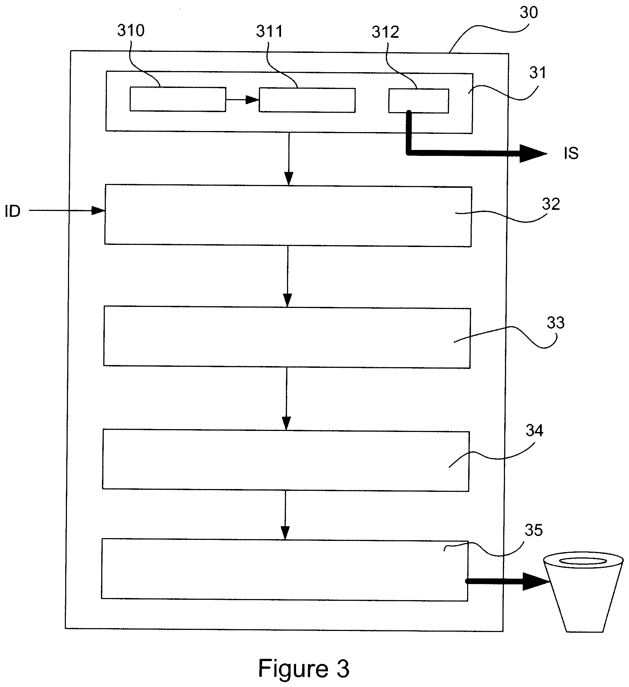

On présente en relation avec la figure 3, les principales étapes du procédé (30) selon un mode de réalisation de l'invention, dans un système tel que décrit précédemment (figure 2).

On considère donc un utilisateur *A* d'un terminal souhaitant établir une communication avec un destinataire *D.* L'utilisateur A souhaite par exemple organiser une surprise d'anniversaire.

Ainsi, l'utilisateur A, active (31) le procédé selon l'invention permettant le masquage de l'identité de son interlocuteur. L'étape d'activation (31) comprend une étape de saisie (310) au sein du terminal d'un préfixe d'activation qui déclenche (311) l'activation d'une phase de masquage selon le procédé 30 de l'invention.

Cette étape de saisie peut être une saisie vocale ou une saisie au clavier. L'utilisation d'une saisie vocale peut par ailleurs mettre en oeuvre une reconnaissance vocale permettant d'identifier le locuteur (l'utilisateur appelant).

Ainsi, il est par exemple possible d'interdire à un utilisateur de masquer l'identifiant de l'interlocuteur qu'il appelle. En effet, l'utilisateur A a pu au préalable effectuer une identification préalable de l'ensemble des utilisateurs potentiels des terminaux de son domicile et a rentré les caractéristiques de chacun.

Ainsi l'invention utilisant une saisie vocale mettant en oeuvre une étape de reconnaissance vocale est apte à identifier un utilisateur « interdit » de masquage selon un paramètre prédéterminé. Par exemple, on peut considérer que l'utilisateur A a paramétré le système de manière à interdire le masquage de l'identifiant à un enfant du domicile. Ainsi un enfant ne pourra pas déclencher le masquage de l'identifiant du destinataire. Cette précaution peut s'avérer nécessaire afin, par exemple de limiter l'accès aux enfants à des lignes téléphoniques ou des sites Internet particuliers.

Ainsi l'invention peut permettre d'augmenter l'efficacité du contrôle parental au sein d'un domicile.

Par ailleurs, l'utilisateur A peut également déclencher le masquage de l'identifiant du destinataire pour une pluralité de communications successives, par exemple à l'aide d'un préfixe saisi sur le clavier du terminal. Par exemple il est possible de déclencher l'activation du masquage lors d'un premier appel et de le désenclencher lorsque le dernier appel est passé.

Le préfixe peut correspondre à un code de plusieurs caractères. Ce code peut être selon le mode de réalisation de l'invention fixé par l'opérateur, fixé par défaut au sein du terminal, ou encore paramétré et flexible par l'utilisateur A.

Selon d'autres modes de réalisation, il est possible de mettre en oeuvre un déclenchement automatique quel que soit l'identifiant du destinataire. En d'autres termes, cela revient à un masquage permanent de l'identifiant de tous les destinataires.

Le désenclenchement de l'activation peut être activé par une nouvelle saisie du même préfixe ou encore par saisie d'un autre préfixe.

Ce déclenchement automatique peut être effectué par utilisation de codes DTMF (de l'anglais « dual-tone multi-frequency ») correspondant à des combinaisons de fréquences utilisées pour la téléphonie moderne, ou encore par serveur vocal ou bien même Internet.

Un autre mode de réalisation peut aussi mettre en oeuvre un déclenchement appel par appel nécessitant la saisie d'un préfixe pour l'activation du masquage, en fonction des besoins de l'utilisateur A, le désenclenchement étant automatique à chaque fin de communication.

Par ailleurs, ladite phase d'activation (31) met également en oeuvre une phase de transmission (312) d'une information de signalisation I_{S} de ladite activation à destination d'une entité réseau de communication.

L'utilisateur A peut également par cette information de signalisation, insérée dans le signal de communication, informer le destinataire D comme la base de données 27 (du système représenté en relation avec la figure 2) de sa volonté de masquer l'identité de son interlocuteur que ce soit au sein de son domicile ou encore sur la facture délivrée par l'opérateur de communication.

Par ailleurs, cette information peut avertir l'interlocuteur D du désir de l'utilisateur A de masquer la communication à son entourage. Ainsi cette option de signalisation peut permettre au destinataire D d'être averti du souhait de discrétion que l'utilisateur appelant souhaite réserver à l'appel qu'il passe. Plus particulièrement, cette information peut être transmise au destinataire sous la forme d'un message vocal préalable à l'établissement de la communication ou lors d'une éventuelle présentation de l'appel de l'utilisateur appelant à l'interlocuteur appelé.

Une fois la phase de masquage activée (31) par saisie (310) d'un préfixe d'activation qui en génère le déclenchement (311), l'utilisateur procède à la saisie de l'identifiant *ID* du destinataire qu'il souhaite joindre.

Le procédé selon l'invention met alors en oeuvre une étape d'interception (32) de l'identifiant *ID* précédemment saisi et remplace (33) au moins un caractère constitutif dudit identifiant par au moins un caractère de masquage. Ainsi, l'identifiant *ID* correspondant par exemple au numéro 10 04 33 06 72 peut être remplacé selon l'invention par l'identifiant masqué XX XX XX XX XX ou encore la combinaison obtenue de manière aléatoire 33 XX 17 AB 89 ou encore un écran noir ou blanc.

Par ailleurs, l'identifiant peut également être reconnu et s'il correspond à un destinataire dont la communication avec l'utilisateur est surtaxée, l'activation de la phase de masquage est alors ignorée par le terminal.

Ainsi l'accès à des sites Internet, ou des numéros téléphoniques surtaxés ne peut être effacé de l'écran et/ou du journal d'appel du terminal, et/ou encore de la facture délivrée par l'opérateur de communication, ce qui permet de garder un contrôle sur l'identification des communications surtaxées du domicile.

Selon le mode de réalisation représenté sur la figure 3, le terminal affiche (34) l'identifiant masqué par l'intermédiaire des moyens d'affichage qu'il comprend.

Enfin le terminal procède également à la suppression (35) de l'identifiant saisi par l'utilisateur A, d'un historique de communication dudit terminal. Si l'utilisateur A utilise par exemple un terminal correspondant à un combiné téléphonique, l'identifiant, et selon un mode de réalisation particulier la trace de la communication globale du destinataire de la communication souhaitée cachée, sera effacé(e) du journal d'appel du téléphone utilisé par le l'utilisateur A.

Selon un mode de réalisation non représenté, on pourrait également considérer l'utilisation de terminaux dépourvus de moyens d'affichage mettant en oeuvre l'invention afin de masquer l'identifiant du destinataire, par exemple, dans un journal d'appels réseau ou encore sur une facture de l'utilisateur.

### Description d'un mode de réalisation de l'invention au sein d'une entité d'un réseau de communication.

Selon un mode de réalisation non représenté, une entité d'un réseau contenant une base de données 27 de communication réceptionne un signal de communication échangé entre un utilisateur A d'un procédé selon l'invention et un destinataire D.

Ladite entité est informée par l'information de signalisation I_{S} insérée dans le signal de communication selon l'invention, de l'activation de la phase de masquage par l'utilisateur A émetteur de la communication.

Ladite entité procède alors en conséquence à la signalisation du masquage de l'identifiant ID du destinataire de la communication au sein de sa base de données représentative des communications dudit utilisateur.

L'entité de réseau délivrera en conséquence un historique de communication ou encore une facture préservant l'anonymat du destinataire de ladite communication.

### Structure d'un terminal selon l'invention

On présente finalement, en relation avec la figure 4, la structure simplifiée d'un terminal mettant en oeuvre un masquage d'identifiant selon l'invention.

Un tel terminal comprend une mémoire 43 constituée d'une mémoire tampon M, une unité de traitement 41 équipée par exemple d'un microprocesseur µP, et pilotée par le programme d'ordinateur Pg 42, mettant en oeuvre le procédé d'établissement de communication selon l'invention.

A l'initialisation, les instructions de code du programme d'ordinateur 42 sont par exemple chargées dans une mémoire RAM avant d'être exécutées par le processeur de l'unité de traitement 41. L'unité de traitement 41 reçoit en entrée un préfixe d'activation de ladite phase de masquage. Le microprocesseur de l'unité de traitement 41 met en oeuvre les étapes d'interception de l'identifiant du destinataire saisi par ledit utilisateur, de remplacement d'au moins un caractère constitutif dudit identifiant dudit destinataire par au moins un caractère de masquage, délivrant un identifiant masqué, et d'affichage dudit identifiant masqué par l'intermédiaire desdits moyens d'affichage dudit terminal (lorsque le terminal est pourvu de tels moyens d'affichage), selon les instructions du programme d'ordinateur 42, pour décider si chacun des identifiants reçus doit être mémorisé dans le terminal ou supprimé. Pour cela, le terminal comprend, outre la mémoire tampon 43, des moyens de masquage d'identifiant d'au moins un destinataire d'une communication comprenant pour au moins un destinataire : des moyens d'interception d'un identifiant d'un destinataire saisi par ledit utilisateur, des moyens de remplacement d'au moins un caractère constitutif dudit identifiant dudit destinataire par au moins un caractère de masquage, délivrant un identifiant masqué. Ces moyens sont pilotés par le microprocesseur du terminal 41.

Selon un mode de réalisation particulier, le terminal comprend des moyens d'affichage d'un identifiant et des moyens d'affichage dudit identifiant masqué par l'intermédiaire desdits moyens d'affichage dudit terminal.

## Revendications

1. Procédé (30) d'établissement d'une communication entre un utilisateur (A) et au moins un destinataire (D),
ledit procédé est mis en oeuvre par un terminal et est **caractérisé en ce qu'**il comprend, préalablement à l'établissement de ladite communication, une phase de masquage d'identifiant comprenant les étapes suivantes, pour au moins un destinataire :
- interception (32) d'un identifiant d'un destinataire saisi par ledit utilisateur ;
- modification (33) d'un signal comportant ledit identifiant, ledit signal étant destiné à un affichage dudit identifiant ou à établir ladite communication, l'étape de modification comprenant une étape de remplacement dans ledit signal d'au moins un caractère constitutif dudit identifiant par au moins un caractère de masquage, délivrant un identifiant masqué, de sorte que l'identifiant modifié ne soit pas interprétable par un autre utilisateur.

2. Procédé selon la revendication 1, **caractérisé en ce que** ledit utilisateur dispose d'au moins un terminal comprenant des moyens d'affichage (12) d'un identifiant d'au moins un destinataire d'une communication, et **en ce qu'**il comporte en outre une étape de restitution (34) dudit identifiant masqué par l'intermédiaire desdits moyens d'affichage dudit terminal.

3. Procédé selon la revendication 2, **caractérisé en ce qu'**il comprend en outre une étape de suppression (35) dudit identifiant saisi par ledit utilisateur dans un historique de communication dudit terminal et/ou de remplacement par ledit identifiant masqué.

4. Procédé selon la revendication 1, **caractérisé en ce qu'**il comprend en outre une phase d'activation (31) de ladite phase de masquage.

5. Procédé selon la revendication 4, **caractérisé en ce que** ladite phase d'activation comprend une étape de transmission (312) d'une information de signalisation de ladite activation à destination d'une entité d'un réseau de communication.

6. Procédé selon la revendication 4, **caractérisé en ce que** ladite phase d'activation comprend une étape de déclenchement (311) automatique quel que soit l'identifiant dudit destinataire.

7. Procédé selon la revendication 4, **caractérisé en ce que** ladite phase d'activation comprend une étape de déclenchement (311) par l'utilisateur pour une pluralité de communications successives.

8. Procédé selon la revendication 4, **caractérisé en ce que** ladite phase d'activation comprend une étape de déclenchement (311) par l'utilisateur pour la prochaine communication.

9. Procédé selon l'une quelconque des revendications 7 ou 8 **caractérisé en ce que** ladite phase d'activation (31) comprend une étape de saisie (310), au sein dudit terminal, d'un préfixe d'activation entré par l'utilisateur.

10. Procédé selon la revendication 4, **caractérisé en ce que** ladite phase d'activation est ignorée si ledit identifiant correspond à un destinataire avec lequel la communication présente une caractéristique prédéterminée, par exemple une surtaxe.

11. Procédé selon la revendication 1, **caractérisé en ce qu'**il comprend en outre les étapes suivantes :
- réception par une entité d'un réseau de communication, d'un signal de communication échangé entre un utilisateur et au moins un destinataire, ledit signal comprenant une information de signalisation d'une activation d'un masquage d'un identifiant dudit au moins un destinataire ;
- masquage dudit identifiant dudit au moins un destinataire de ladite communication, au sein d'une base de données représentatives des communications dudit utilisateur, de ladite entité d'un réseau de communication.

12. Terminal comprenant des moyens d'établissement d'une communication, **caractérisé en ce qu'**il comprend des moyens de masquage d'identifiant de destinataire, comprenant :
- des moyens d'interception d'un identifiant d'un destinataire saisi par ledit utilisateur ;
- des moyens de modification d'un signal comportant ledit identifiant, ledit signal étant destiné à l'affichage dudit identifiant ou à établir ladite communication, lesdits moyens de modification comprenant des.moyens de remplacement d'au moins un caractère constitutif dudit identifiant par au moins un caractère de masquage, délivrant un identifiant masqué, de sorte que l'identifiant modifié ne soit pas interprétable par un autre utilisateur.

13. Terminal selon la revendication 12, comprenant en outre des moyens d'affichage d'un identifiant et des moyens d'affichage dudit identifiant masqué par l'intermédiaire desdits moyens d'affichage dudit terminal.

14. Programme d'ordinateur comportant des instructions pour la mise en oeuvre d'un procédé selon la revendication 1 lorsque ce programme est exécuté par un processeur.

## Patentansprüche

1. Verfahren (30) zum Aufbau einer Kommunikation zwischen einem Benutzer (A) und wenigstens einem Empfänger (D),
wobei das Verfahren von einem Endgerät durchgeführt wird und **dadurch gekennzeichnet ist, dass** es vor dem Aufbau der Kommunikation eine Phase der Maskierung einer Kennung umfasst, welche die folgenden Schritte umfasst, für wenigstens einen Empfänger:
- Abfangen (32) einer von dem Benutzer eingegebenen Kennung eines Empfängers;
- Modifikation (33) eines diese Kennung umfassenden Signals, wobei das Signal für eine Anzeige der Kennung oder zum Aufbau der Kommunikation bestimmt ist, wobei der Schritt der Modifikation einen Schritt des Ersetzens, in dem Signal, wenigstens eines Zeichens, das Bestandteil der Kennung ist, durch wenigstens ein Maskierungszeichen umfasst, was eine maskierte Kennung liefert, derart, dass die modifizierte Kennung nicht durch einen anderen Benutzer interpretierbar ist.

2. Verfahren nach Anspruch 1, **dadurch gekennzeichnet, dass** der Benutzer über wenigstens ein Endgerät verfügt, das Mittel zur Anzeige (12) einer Kennung wenigstens eines Empfängers einer Kommunikation umfasst, und dadurch, dass es außerdem einen Schritt der Wiederherstellung (34) der maskierten Kennung über die Anzeigemittel des Endgerätes umfasst.

3. Verfahren nach Anspruch 2, **dadurch gekennzeichnet, dass** es außerdem einen Schritt der Unterdrückung (35) der von dem Benutzer eingegebenen Kennung in einer Kommunikationshistorie des Endgerätes und/oder des Ersetzens durch die maskierte Kennung umfasst.

4. Verfahren nach Anspruch 1, **dadurch gekennzeichnet, dass** es außerdem eine Phase der Aktivierung (31) der Maskierungsphase umfasst.

5. Verfahren nach Anspruch 4, **dadurch gekennzeichnet, dass** die Aktivierungsphase einen Schritt der Übertragung (312) einer Information zur Signalisierung der Aktivierung zu einer Entität eines Kommunikationsnetzes umfasst.

6. Verfahren nach Anspruch 4, **dadurch gekennzeichnet, dass** die Aktivierungsphase einen Schritt der automatischen Auslösung (331) unabhängig von der Kennung des Empfängers umfasst.

7. Verfahren nach Anspruch 4, **dadurch gekennzeichnet, dass** die Aktivierungsphase einen Schritt der Auslösung (311) durch den Benutzer für mehrere aufeinander folgende Kommunikationen umfasst.

8. Verfahren nach Anspruch 4, **dadurch gekennzeichnet, dass** die Aktivierungsphase einen Schritt der Auslösung (311) durch den Benutzer für die nächste Kommunikation umfasst.

9. Verfahren nach einem der Ansprüche 7 oder 8, **dadurch gekennzeichnet, dass** die Aktivierungsphase (31) einen Schritt der Erfassung (310), innerhalb des Endgerätes, eines von dem Benutzer eingegebenen Aktivierungs-Vorsatzcodes umfasst.

10. Verfahren nach Anspruch 4, **dadurch gekennzeichnet, dass** die Aktivierungsphase ignoriert wird, falls die Kennung einem Empfänger entspricht, mit welchem die Kommunikation ein vorbestimmtes Merkmal aufweist, zum Beispiel eine Zuschlagsgebühr.

11. Verfahren nach Anspruch 1, **dadurch gekennzeichnet, dass** es außerdem die folgenden Schritte umfasst:
- Empfangen, durch eine Entität eines Kommunikationsnetzes, eines Kommunikationssignals, das zwischen einem Benutzer und wenigstens einem Empfänger ausgetauscht wird, wobei das Signal eine Information zur Signalisierung einer Aktivierung einer Maskierung einer Kennung des wenigstens einen Empfängers umfasst;
- Maskierung der Kennung des wenigstens einen Empfängers der Kommunikation innerhalb einer repräsentative Daten der Kommunikationen des Benutzers enthaltenden Datenbank der Entität eines Kommunikationsnetzes.

12. Endgerät, welches Mittel zum Aufbau einer Kommunikation umfasst, **dadurch gekennzeichnet, dass** es Mittel zur Maskierung einer Kennung eines Empfängers umfasst, welche umfassen:
- Mittel zum Abfangen einer von dem Benutzer eingegebenen Kennung eines Empfängers;
- Mittel zur Modifikation eines diese Kennung umfassenden Signals, wobei das Signal für die Anzeige der Kennung oder zum Aufbau der Kommunikation bestimmt ist, wobei die Mittel zur Modifikation Mittel zum Ersetzen wenigstens eines Zeichens, das Bestandteil der Kennung ist, durch wenigstens ein Maskierungszeichen umfassen, was eine maskierte Kennung liefert, derart, dass die modifizierte Kennung nicht durch einen anderen Benutzer interpretierbar ist.

13. Endgerät nach Anspruch 12, welches außerdem Mittel zur Anzeige einer Kennung und Mittel zur Anzeige der maskierten Kennung durch die Anzeigemittel des Endgerätes umfasst.

14. Computerprogramm, welches Anweisungen zur Durchführung eines Verfahrens nach Anspruch 1, wenn dieses Programm von einem Prozessor ausgeführt wird, umfasst.

## Claims

1. Method (30) for establishing communication between a user (A) and at least one recipient (D), said method being implemented by a terminal and being **characterized in that** it comprises, prior to said communication being established, an identifier masking phase comprising the following steps, for at least one recipient:
- intercepting (32) an identifier of a recipient entered by said user;
- modifying (33) a signal containing said identifier, said signal being intended to display said identifier or to establish said communication, the modification step comprising a step of replacing, in said signal, at least one character forming said identifier with at least one masking character, delivering a masked identifier, such that the modified identifier is not able to be interpreted by another user.

2. Method according to Claim 1, **characterized in that** said user has at least one terminal comprising means (12) for displaying an identifier of at least one recipient of a communication, and **in that** it furthermore includes a step (34) of rendering said masked identifier by way of said display means of said terminal.

3. Method according to Claim 2, **characterized in that** it furthermore comprises a step (35) of deleting said identifier entered by said user in a communication history of said terminal and/or of replacing it with said masked identifier.

4. Method according to Claim 1, **characterized in that** it furthermore comprises a phase (31) of activating said masking phase.

5. Method according to Claim 4, **characterized in that** said activation phase comprises a step (312) of transmitting an item of information signalling said activation to an entity of a communication network.

6. Method according to Claim 4, **characterized in that** said activation phase comprises an automatic triggering step (311), regardless of the identifier of said recipient.

7. Method according to Claim 4, **characterized in that** said activation phase comprises a step (311) of triggering by the user for a plurality of successive communications.

8. Method according to Claim 4, **characterized in that** said activation phase comprises a step (311) of triggering by the user for the next communication.

9. Method according to either one of Claims 7 and 8, **characterized in that** said activation phase (31) comprises a step (310) of entering, into said terminal, an activation prefix entered by the user.

10. Method according to Claim 4, **characterized in that** said activation phase is ignored if said identifier corresponds to a recipient with which the communication has a predetermined characteristic, for example an additional charge.

11. Method according to Claim 1, **characterized in that** it furthermore comprises the following steps:
- reception, by an entity of a communication network, of a communication signal exchanged between a user and at least one recipient, said signal containing an item of information signalling activation of masking of an identifier of said at least one recipient;
- masking said identifier of said at least one recipient of said communication, within a database of data, representative of the communications of said user, of said entity of a communication network.

12. Terminal comprising means for establishing communication, **characterized in that** it comprises means for masking an identifier of a recipient, comprising:
- means for intercepting an identifier of a recipient entered by said user;
- means for modifying a signal containing said identifier, said signal being intended to display said identifier or to establish said communication, said modification means comprising means for replacing at least one character forming said identifier with at least one masking character, delivering a masked identifier, such that the modified identifier is not able to be interpreted by another user.

13. Terminal according to Claim 12, furthermore comprising means for displaying an identifier and means for displaying said masked identifier by way of said display means of said terminal.

14. Computer program including instructions for implementing a method according to Claim 1 when this program is executed by a processor.
